# EUROPEAN PATENT APPLICATION

(11) **EP 2 073 442 A1**
(43) Date of publication of application: **24.06.2009**
(21) Application number: 07291594.5
(22) Date of filing: 21.12.2007
(51) Int. Cl.: H04L 12/26

(54) **Quality of service measurements for streamed content**

(71) Applicant: Alcatel Lucent, 75008 Paris (FR)
(72) Inventor: Huysegems, Rafael, 2800 Walem (Mechelen) (BE); Six, Erwin, 9270 Kalken (BE); Miclea, Sorin, 2595 HK Den Haag (NL); Verzijp, Nico Victor, 2018 Antwerpen (BE); Dequeker, Hans Maurice Felix Corneel, 3020 Herent (BE)
(74) Representative: D'Halleweyn, Nele Veerle Trees Gertrudis

(57) **Abstract**

The present invention relates to a method to test the Quality of Service (QoS) pertaining to content that is streamed over a packet-based network. The present invention further relates to a network element that can be used for implementing this method. According to the invention, a method to test the Quality of Service is provided in which content is reflected from within said network. Additionally, the present invention provides a network element having an input and a first output for the transport of streamed content that comprises a second output and means to capture content received at the input and to re-direct the captured content to the second output.

## Description

The present invention relates to a method to test the Quality of Service (QoS) pertaining to content that is streamed over a packet-based network. The present invention further relates to a network element that can be used for implementing this method.

Analog television is steadily being replaced by digital techniques, for instance Internet Protocol Television (IP-TV) or Digital Video Broadcasting (DVB) television. In both techniques, the analog signal is replaced by a digital counterpart. Typically, the video content is transferred in a compressed stream. Such a stream consists of a sequence of packets. In addition to the actual digital representation of the video signal, the packets comprise a number of headers which convey additional information such as the destination address, the sequence number of the packet, timestamps, stream identification, source identification, encoding format etc.

Similar to analog television, the television signal needs to be reconstructed continuously. To make it possible to reconstruct the signal in a timely matter, the delivery of the packets by the network must meet certain minimum quality criteria levels for network paramaters parameters such as drop, latency, jitter, reordering etc. To minimize the impact of these network parameters, most digital television receivers, e.g. set-top boxes, contain a buffer. However, the use of a buffer does not eliminate these problems.

A content provider wishes to ensure the best possible Quality of Service (QoS) of the content that is actually received by the end-user. Current solutions to determine the end-user experience are based on measuring the abovementioned network parameters, followed by an indirect computation of the quality of content transported over such a network. Hence, it is an indirect method that can only predict an overall average performance. Problems that an individual end-user faces at a given time are not always visible in this calculated overall QoE figure. Such problems may include visual artifacts, channels that are unavailable, slow response to zapping commands or slow response of the system in general. These impairments can depend on the time of the day of a particular action of the user, e.g. zapping, and may not be visible in an overall QoE value.

Although examples have been provided with respect to video signals, not excluding the corresponding audio signals, the invention applies to streamed content in general, for which the reconstruction requires the accurate timing of packets.

The object of the present invention is to provide a method to test the QoS pertaining to content that is streamed over a packet-based network, in which the abovementioned problems do not occur, or at least in a lesser degree.

This objective is achieved by reflecting the steamed content from within said network. The reflection enables the remote inspection of the content by an operator. By reflecting the content at a strategic point, or points, in the network the operator can inspect the quality of the content at the point where it is reflected in the network.

The reflection process preferably comprises the capturing of content packets and the re-directing of these packets. To eliminate any distortion that may occur in the reflection path, i.e. from the reflection point to the inspection point, it is advantageous if the captured packets are provided with time stamps. These time stamps represent the time at which the content packets were received and or captured at the reflection point. Using these time stamps, the operator can reconstruct the content at the reflection point with high accuracy.

As stated above, most receivers of streamed content comprise buffers. These buffers have a limited amount of memory. If the packet reception severely degrades, the buffer filling level may go to zero, which results in loss of signal. It is advantageous if this aspect of the signal reconstruction can be added to the reflected content. A possible implementation is to add the buffer filling level as separate information to each packet that is reflected. Of course, this information could also be sent on regular intervals.

Packet-based networks comprise a receiver, responsible for the reconstruction of the video/audio/voice signal. An example of such a receiver is a set-top box for DVB or IP-TV. These receivers usually comprise means to control the content that is being received. These means are responsive to control signals from a user of the receiver. It is convenient if the operator can remotely control the content much like the user can do locally. In this way, the operator is able to experience the problems a user may have in controlling the content. An important example is the changing of channels in case of a television signal.

Important types of content for which the present invention can be applied are IP-TV and DVB, although the present invention is not limited to these types of content.

The present invention further provides a network element for use in a packet-based network which has an input and a first output for the transport of streamed content. It is characterized by a second output and in that this network element comprises means to capture content received at the input and to re-direct said captured content to said second output. Such a network element could be used to reflect content at the location at which this element is placed in the network. This element can be added to an existing network element or be part of an existing element. It may further be a stand-alone element specifically targeted at content reflection. Typical network elements that comprise such an element are a set-top box, an edge router, an aggregation switch, a DSLAM, a DSL-modem, a cable-modem or a home-router/gateway.

In the following, the present invention will be described in more detail with reference to the accompanying figures in which:
Figure 1 depicts an example of an IP-TV network in which content is reflected;
Figure 2 illustrates a set-top box according to the present invention;
Figure 3 shows a network element according to the present invention; and
Figure 4 illustrates a possible build-up of a reflected packet.

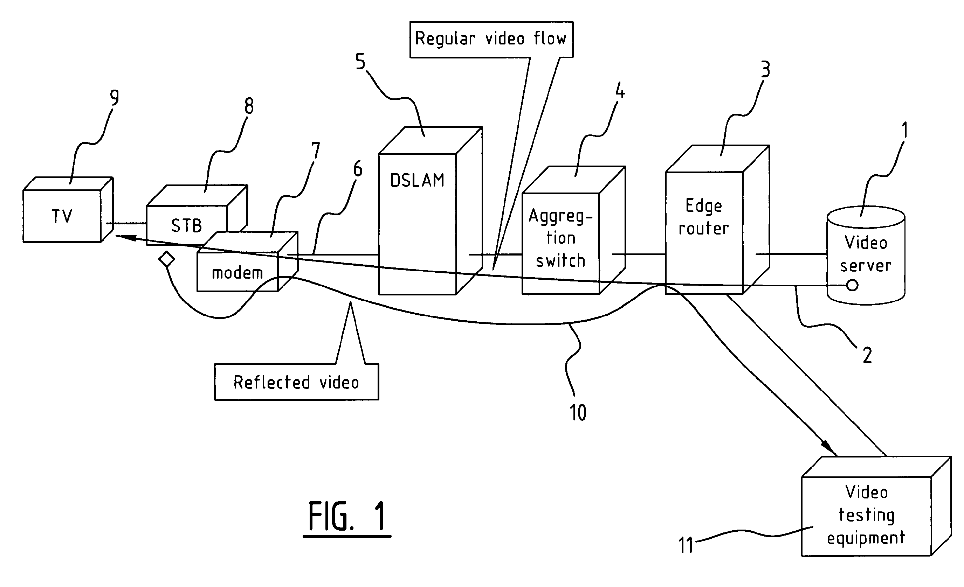

In the IP-TV network of figure 1, a video server 1 streams a video signal 2 to an edge router 3. The router distributes the stream to an aggregation switch 4, which in turn is connected to multiple DSLAMs 5 of which only one is shown. Each DSLAM 5 multiplexes several individual XSDL lines. In figure 1, one XDSL line 6 is shown which is connected to a modem 7 of an end-user. A set-top box 8 is connected to this modem to decode the signals and to send them to a television 9.

Set-top box 8 is equipped with means to reflect the original video stream 2. As a result, a reflected video stream 10 is transported back to the edge router 3 where it is directed to video testing equipment 11.

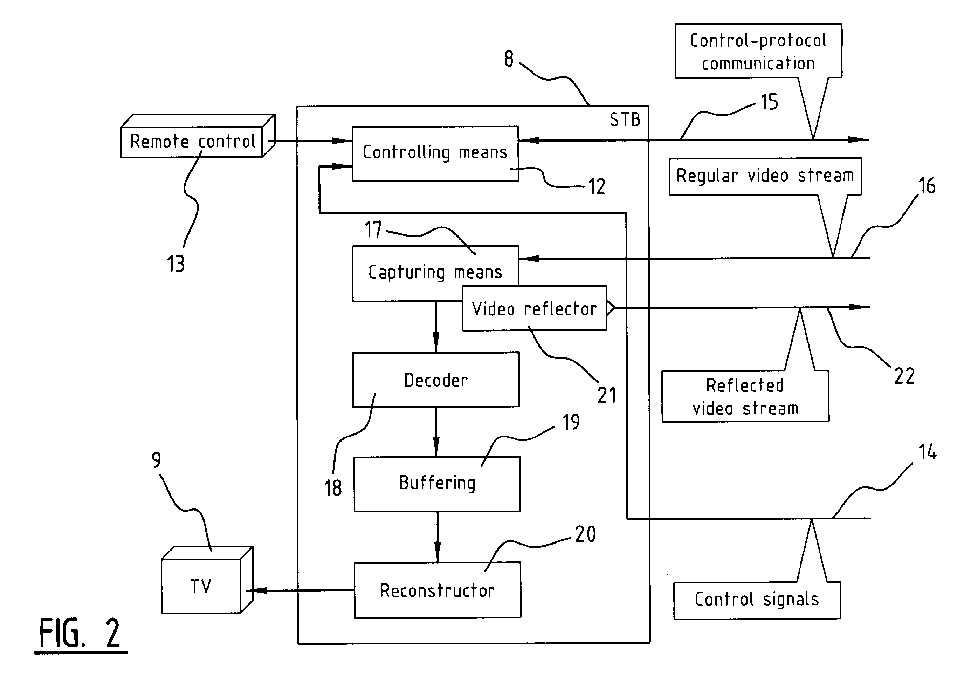

Figure 2 illustrates an embodiment of a set-top box 8 according to the present invention. It comprises controlling means 12 which can be operated by a remote control 13 of a user or remotely by the operator using control signals 14. The controlling means enable control-protocol communication 15 with the network, e.g. DSLAM, to for instance select a desired television channel.

The set-top box 8 comprises an input for the regular video stream 16. Packets received at this input are subsequently captured by known capturing means 17, decoded in decoder 18 and buffered in buffer 19. As a last step the television signal is reconstructed in reconstructor 20 and sent to the television 9.

In this embodiment, the video stream is reflected by the video reflector 21 after the capturing of the packets 17. In addition, information regarding the filling level of the buffer 19 and the time stamps pertaining to the time of reception and or capturing of the packets is included in the reflected video stream 22.

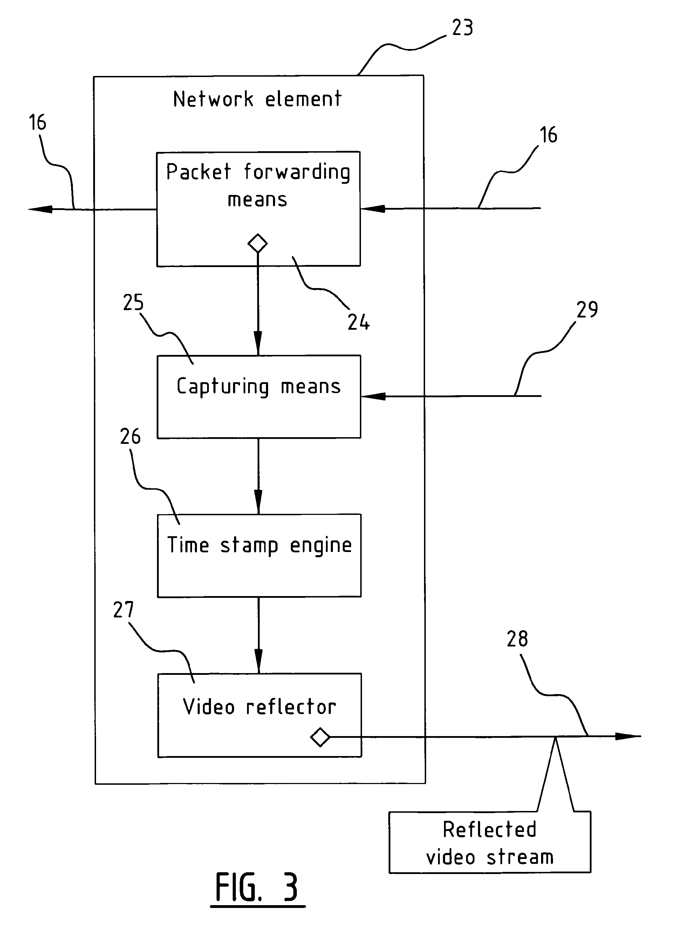

Figure 3 depicts a network element 23 which can be used to reflect content according to the present invention. The network element has a first input and output which enable packet forwarding by packet forwarding means 24 of video stream 16. This configuration is known in the art. Additionally, the element comprises means to capture packets 25. After capturing, the captured packets are provided with a time stamp in the time stamp engine 26 after which the packets are re-directed by the video reflector 27 in a reflected video stream 28 preferably to the operator or test equipment.

Additionally, the network element may be responsive to remote control signals 29, which can for instance be used to select a certain channel in video stream 16. In this way, only that specific channel is reflected.

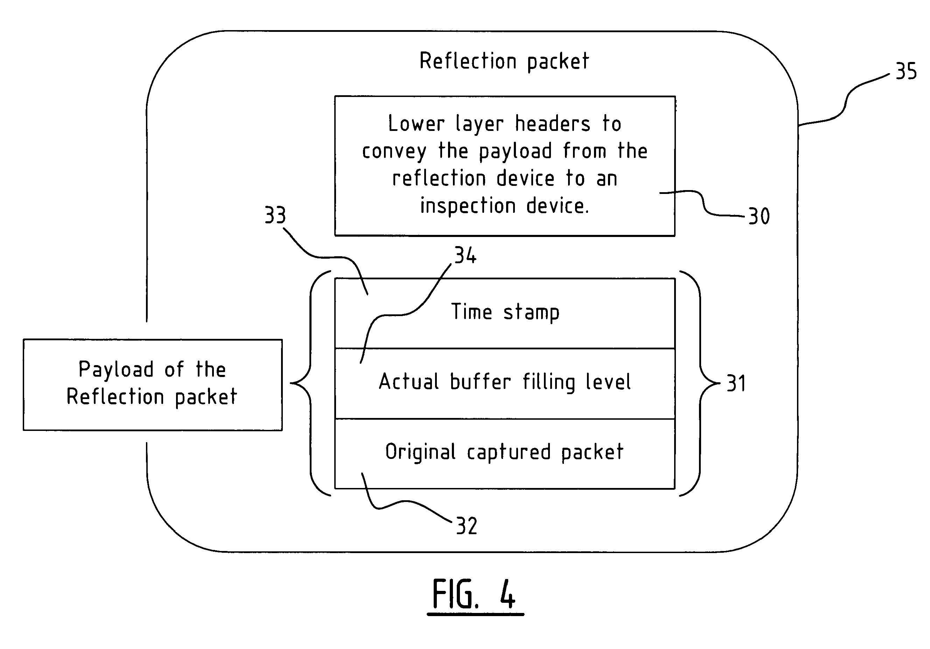

An example of a reflected packet 35 is illustrated in figure 4. The packet is provided with lower layer headers 30 that contain information to convey a payload 31 from the device at which the content is reflected to the inspection destination, e.g. test equipment. The abovementioned payload comprises a captured packet 32 of the content stream as well as time stamp information 33 pertaining to the corresponding reception and or capturing. In addition, the actual filling level of a buffer 34 can be included if applicable, e.g. the buffer level of a set-top box. It should be noted that the original captured packet may also contain lower layer headers. These headers contain information pertaining to the original stream and may comprise the destination and source of the original content stream. They can be found at the start of the so-called "original captured packet" 32.

The present invention has been described in detail referring to specific embodiments thereof. However, the skilled person in the art may recognize that modifications, additions, or adjustments can be made without deviating from the scope of the present invention as defined by the following claims.

## Claims

1. A method to test Quality of Service (QoS) pertaining to content that is streamed over a packet-based network, **characterized by** reflecting said content from within said network.

2. The method according to claim 1, **characterized in that** said reflecting comprises the steps of capturing packets of said content and re-directing said packets.

3. The method according to claim 2, **characterized in that** said reflecting further comprises the addition of time stamps to said packets.

4. The method according to claim 1, wherein said network comprises a receiver having a buffer to buffer said streamed content, **characterized by** adding a filling level of said buffer to said content prior to reflection.

5. The method according to claim 1, wherein said network comprises a receiver having controlling means which are responsive to control signals from a user, and which are arranged to control said content, **characterized in** remotely controlling said content.

6. The method according to claim 5, wherein said content comprises a multiplicity of content channels, **characterized in** selecting a channel of said content.

7. The method according to claim 1, wherein said content comprises Internet Protocol Television (IPTV).

8. The method according to claim 1, **characterized in that** said content comprises Digital Video Broadcasting (DVB) content.

9. A network element for use in a packet-based network having an input and a first output for the transport of streamed content, **characterized in that** said network element is provided with a second output and **in that** said network element comprises means to capture content received at the input and to re-direct said captured content to said second output.

10. The network element according to claim 9, **characterized in that** said network element is a set-top box, an edge router, an aggregation switch, a DSLAM, a DSL-modem, a cable-modem or a home-router/gateway.
